# EUROPEAN PATENT SPECIFICATION

(11) **EP 4 098 530 B1**
(45) Date of publication and mention of the grant of the patent: **21.08.2024**
(21) Application number: 22176705.6
(22) Date of filing: 01.06.2022
(51) Int. Cl.: B62K 5/02, B62M 1/10, B62M 1/18, B62M 1/26, B62M 1/28

(54) **CYCLE, ESPECIALLY A TWO-WHEELED BICYCLE, WITH A LEVER DRIVE**
FAHRRAD, INSBESONDERE ZWEIRADFAHRRAD, MIT EINEM HEBELANTRIEB
BICYCLETTE, EN PARTICULIER UNE BICYCLETTE À DEUX ROUES, DOTÉE D'UN LEVIER DE COMMANDE

(30) Priority: 02.06.2021 PL 43806121
(43) Date of publication of application: 07.12.2022
(73) Proprietor: Property Found Spolka z ograniczona odpowiedzialnoscia, 66-010 Nowogrod Bobrzanski (PL)
(72) Inventor: Bujalski, Krzysztof, 65-736 Zielona Gora (PL)
(74) Representative: AOMB Polska Sp. z.o.o.

(56) References cited:
- WO-A2-01/15965
- AT-B- 404 346
- DE-A1- 19 906 819
- PL-B1- 236 654

## Description

The subject of invention is a cycle, especially a two-wheeled cycle, with a lever drive. Polish patent description Pat. 236654, which shows the preamble of claim 1, presents a bicycle with a lever drive consisting of two vertical bars parallel to each other and ending in the upper part with a backrest, connected in the middle part to the seat tube, and in the lower part attached to the crank arms, equipped with at least one rear wheel, foot supports ending with pedals attached to the bicycle frame at the height of bicycle wheels and rubbers connecting the crankset with the rear part of the bicycle frame, in which each bar is attached by a tube and a fork mount and an articulated bearing fixed on the axle of the pedal mounted on the crank arm, and three rubbers are attached to the pedal axle, where the other end of the first rubber is connected to the bicycle frame, the other end of the second rubber is connected to the frame brackets, while the other end of the third rubber is connected to the rubber bracket.

The Chinese description of the utility model CN207270666 presents an exercise bike with an adjustable seat attached to a guide mounted on the bicycle frame. The adjustable seat panel is placed on the upper side of the adjustable seat base and at least two sets of rollers with bearings are mounted on the other side of the adjustable seat base. A shaft is attached between each pair of rollers. A hook is placed between the pairs of rollers to prevent the adjustable seat from detaching from the adjustable rail bar. A locking bolt is placed between the hook and the adjustable seat base to set the position between the hook and the base.

According to the invention, a cycle, especially a two-wheeled cycle, with a lever drive consisting of two vertical bars parallel to each other and ending in the upper part with a backrest with a harness, connected in the middle part to a seatpost, and in a lower part attached to pedal axles working with left rubber and right rubber is equipped with at least one rear wheel and two horizontal brackets attached to a frame and ending with foot supports in a front part of the cycle, is characterised in that:
frame brackets are attached in the rear part to a bar axle so that an axle bracket is rigidly attached to one side of the seatpost and attached on the other side to the bar axle, bars are movably attached to the ends of the bar axle, and on the other side the seatpost is rigidly connected to a tube B rigidly attached to the frame brackets,
the cycle features a support mechanism in which top tubes are movably attached to the ends of two support tubes and movably connected to the tube A rigidly attached to the frame brackets, an upper support tube is rigidly attached to the front ends of support tubes, with the upper backrest movably attached to the upper support tube, while an upper bar tube is rigidly attached to an upper part of bars; support tubes are movably attached in the middle part to the upper bar tube, the transverse rear tube of the lower backrest is rigidly attached to an upper parts of top tubes; the tubes connecting the lower backrest are movably attached to the transverse rear tube of the lower backrest and connected on the other side to the lower backrest tube, to which the lower backrest is rigidly attached, and a backrests connector is movably attached to the middle part of the upper support tube and the middle part of the lower backrest tube,
whereby to the lower ends of the bars there are rigidly attached linkages, connected to pedal axles, to which the left rubber and the right rubber are movably attached to the pedal axles, and the cycle is equipped with an adjustable saddle mounted on the frame brackets.

Preferably, the left rubber on the left side of the frame is movably attached with one end to the pedal axle, and the other end of the left rubber is rigidly connected to the left rubber bracket, while the right rubber on the right side of the cycle frame is movably attached with one end to the pedal axle and the other end of the right rubber is rigidly connected to the right rubber bracket mounted on the frame bracket on the right side of the bicycle frame.

Preferably, four concave discs are attached to the lower part of the saddle, two for each frame bracket and two clamps - one for each frame bracket.

In one variant, the cycle is equipped with two rear wheels attached at the ends of a rear wheel axle protruding beyond the outline of the bars and attached to the frame in place of one rear wheel with a drive cassette mounted on the rear wheel axle.

The invention is illustrated in the drawing, in which Fig. 1 shows a schematic side view of a two-wheeled bicycle with a lever drive; Fig. 2 shows a side view of the support mechanism, Fig. 3 shows a bottom view of the adjustable saddle; Fig. 4 shows a schematic side view of a three-wheeled bicycle with a lever drive.

### Numbers:

1 bars
2 upper backrest
3 lower backrest
4 frame brackets
5 frame
6 mount
7 bar axle
8 foot supports
9 foot support tube
9a foot support tube cross connectors
10 seatpost
11 axle bracket
12 cross connectors A (fixing the frame brackets)
13 cross connectors B (with bearing)
14 cross connector C (attached to the seatpost)
15 tube B (connected to frame brackets)
16 cross connectors D (modified at the ends of tube B)
17 cross connectors E (to which the support mechanism is attached)
18 support tubes
19 bearing combinations (at support tubes)
19a fork head
19b articulated head
19c pin
20 top tubes
21 articulated heads
22 tube A (attached to frame brackets)
23 T-connectors (on support tubes)
24 upper support tube
25 pillow block bearings on the upper support tube
26 harness
27 cross connectors F (in the upper part of bars)
28 upper bar tube
29 cross connectors G (on the bar tube)
30 cross connectors H (in the upper parts of top tubes)
31 transverse rear tube (of the lower backrest)
32 connecting tubes (of the lower backrest)
33 articulated heads (with attached connecting tubes)
34 fork mounts
35 lower backrest tube
36 mounts at the ends of the lower backrest tube
37 backrests connector
38 fork mount A (attached in the middle part of the lower backrest tube)
39 fork mount B (attached to the upper support tube)
40 (linkage) bearing combinations
40a fork head
40b articulated head A
40c pin
41 linkage
42 articulated heads B (mounted on pedal axles)
43 pedal axles
44 left rubber
45 right rubber
46 left rubber bracket
47 right rubber bracket
48 adjustable saddle
49 concave discs
50 clamps
51 rear wheel
52 rear wheel axle
53 drive cassette

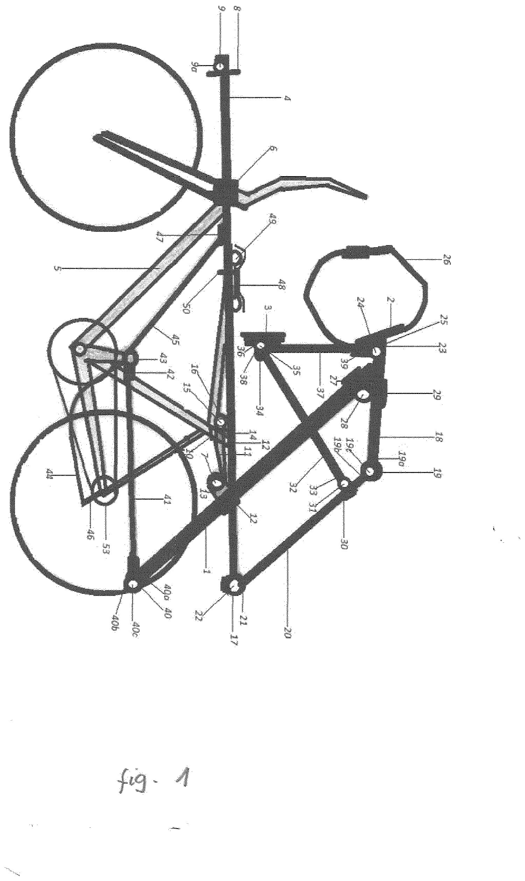

A two-wheeled cycle with a lever drive shown in Fig. 1 - Fig. 3 is equipped with a lever consisting of two vertical bars 1 parallel to each other. An upper backrest 2 and a lower backrest 3 are attached to the upper part of the bars 1 using a support mechanism.

The cycle features two horizontal frame brackets 4 rigidly attached in parallel to a frame 5 in the front part of the cycle using a mount 6 and attached to a bar axle 7 in the lower part. The frame brackets 4 end with a foot supports 8 attached to a foot support tube 9 mounted on the front part of the frame brackets 4 using cross connectors I 9a.

The cycle is equipped with a seatpost 10, to which an axle bracket 11 is rigidly attached and attached on the other side of the bar axle 7. Two cross connectors A 12 fixing the frame brackets 4 are rigidly attached to the bar axle 7, and cross connectors B 13 with bearing are movably attached to the ends of the bar axle 7, with the bars 1 rigidly attached to the cross connectors B 13.

A cross connector C 14 is rigidly attached on the other side to the seatpost 10, and a tube B 15 is rigidly attached to the cross connector C 14 and connected to the frame brackets 4 using modified a cross connectors D 16 attached at the ends of the tube B 15.

A cross connectors E 17 are rigidly attached to the frame brackets 4 at their ends, with a support mechanism attached to the cross connectors E 17.

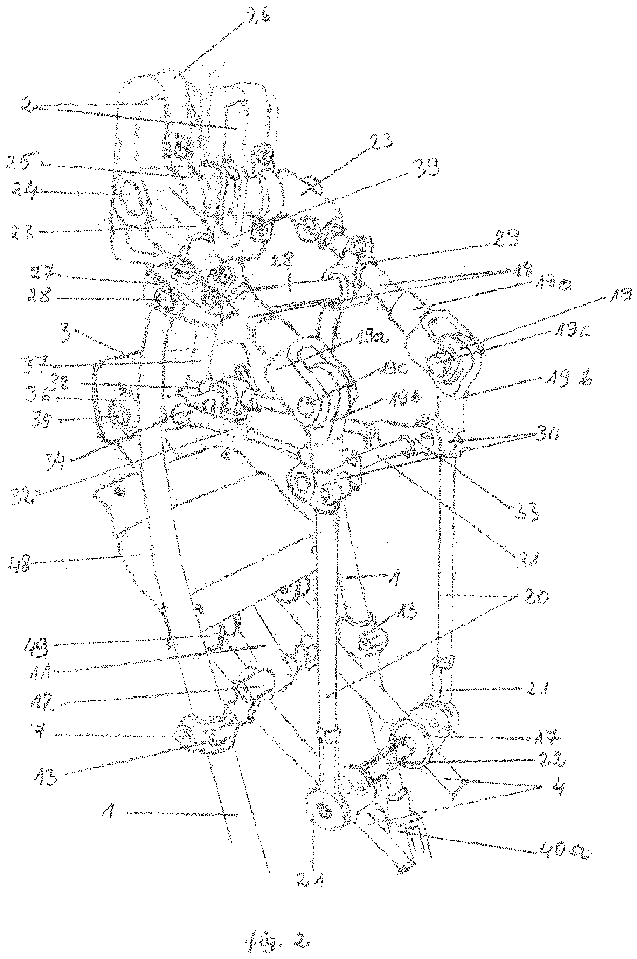

As shown in Fig. 1 and Fig. 2, in the support mechanism, in the rear ends of two support tubes 18, there are bearing combinations 19 rigidly attached and consisting of a fork head 19a, an articulated head 19b and a pin 19c, to which top tubes 20 are movably bolted, movably connected to a tube A 22 using articulated heads 21 attached on their ends. The articulated heads 21 are movably attached to the tube A 22. The tube A 22 is rigidly connected to the cross connectors E 17 and rigidly connected to the frame brackets 4 using the cross connectors E 17. A T-connectors 23 are rigidly attached to the front ends of the support tubes 18, and an upper support tube 24 is rigidly attached to the T-connectors 23. The upper backrest 2 is movably attached to the upper support tube 24 using two pillow block bearings 25 mounted on the upper support tube 24. The upper backrest 2 features a harness 26.

A cross connectors F 27 are rigidly attached to the upper part of the bars 1 and an upper bar tube 28 is rigidly attached to the cross connectors F 27; two cross connectors G 29 are movably attached to the upper bar tube 28, and the support tubes 18 are rigidly attached in the middle part to the cross connectors G 29.

In the upper parts of the top tubes 20, under the bearing combination 19, there are rigidly attached a cross connectors H 30, on which a transverse rear tube 31 of the lower backrest 3 is rigidly mounted. On the transverse rear tube 31 of the lower backrest 3, connecting tubes 32 of the lower backrest 3 are movably attached, screwed to an articulated heads 33 movably attached to the transverse rear tube 31 of the lower backrest 3 on one side and rigidly attached fork mounts 34 movably mounted on a lower backrest tube 35.

Two mounts 36 are rigidly attached to the lower backrest tube 35, with the lower backrest 3 rigidly attached to the mounts 36. A backrests connector 37 is movably attached to the middle part of the upper support tube 24 and the middle part of the lower backrest tube 35; The backrests connector 37 is screwed into a fork mount A 38 attached to the middle part of the lower backrest tube 35 and to a fork mount B 39 movably attached to the upper support tube 24.

Bearing combinations 40 are rigidly attached to lower parts of the bars 1 and consist of a fork head 40a, an articulated head A 40b and a pin 40c to which linkages 41 are attached, and articulated heads B 42 movably mounted on a pedal axles 43 are attached to the ends of the linkages 41. One end of a left rubber 44 and a right rubber 45 is movably attached to the pedal axle 43. The other end of the left rubber 44 on the left side of the frame 5 is rigidly connected to a left rubber bracket 46, while the other end of the right rubber 45 on the right side of the frame 5 is rigidly connected to a right rubber bracket 47 attached to the frame bracket 4 on the right side of the frame 5.

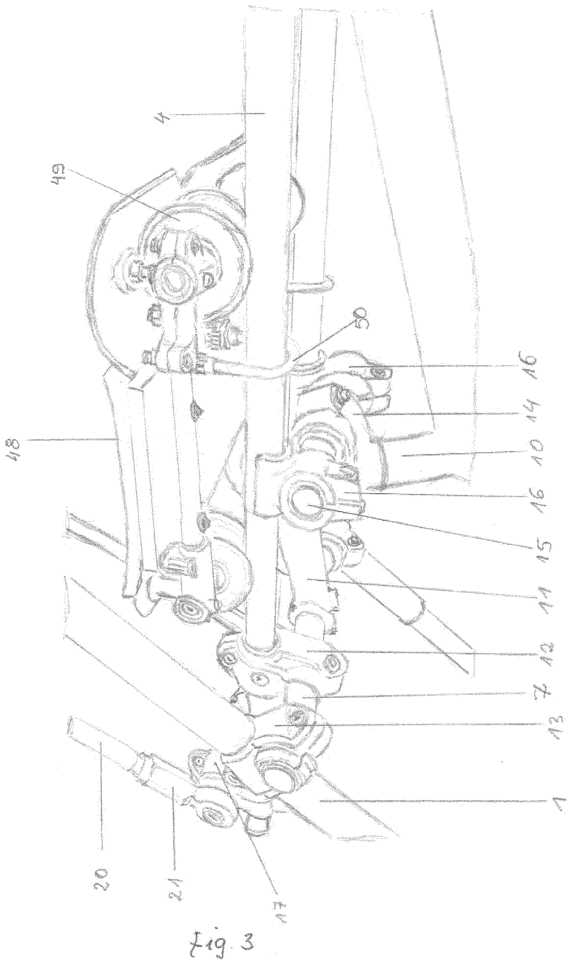

As shown in Fig. 1 and Fig. 3 the cycle is equipped with an adjustable saddle 48 attached to the frame brackets 4. Four concave discs 49 are attached to lower part of the adjustable saddle 48, two for the each frame bracket 4 and two clamps 50 - one for the each frame bracket 4, not in contact with the frame brackets 4.

A lever is moved by a cyclist's back. The cyclist sitting on the adjustable seat 48, leans their legs against the foot supports 8, pushes the lower backrest 3 and the upper backrest 2 with their back and hips, putting the bar 1 in motion, while the bars 1 moving on both sides of a rear wheel 51 transmit the motion through the linkages 41 to the pedal axles 43; the return motion occurs by pulling the entire body towards a steering wheel with hands. At the motion direction turning points of the linkages 41, the left rubber 44 and the right rubber 45 facilitate smooth rotation of a cycle crank.

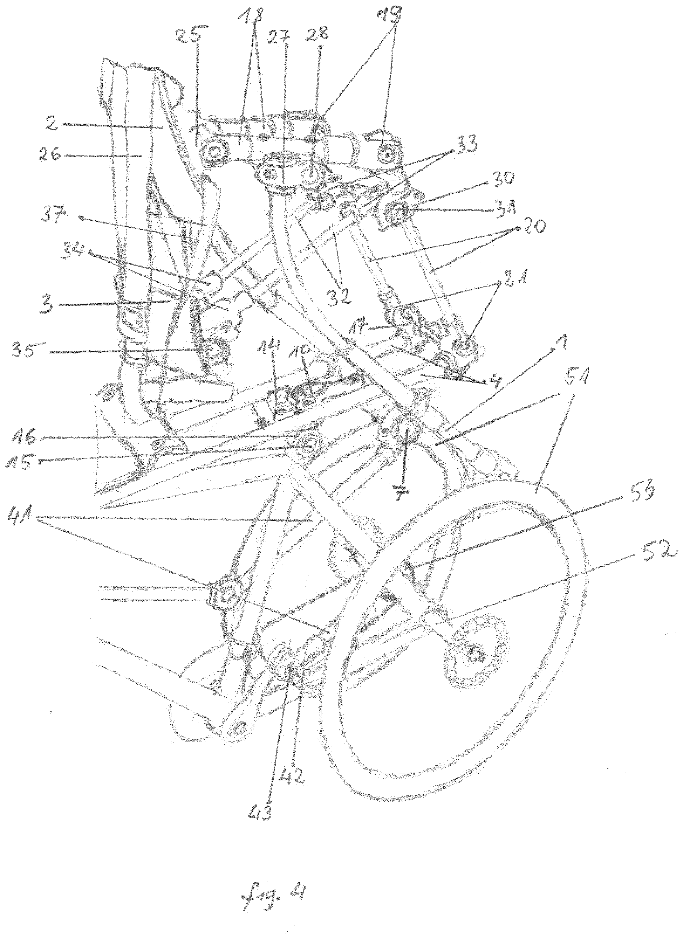

A three-wheeled cycle with two rear wheels 51 shown in Fig. 4, in which a rear wheel axle 52 is attached to the frame 5 in place of the one rear wheel 51; a drive cassette 53 is attached to the rear wheel axle 52. The rear wheel axle 52 protrudes beyond the outline of the bars 1. The two rear wheels 51 are attached to the ends of the rear wheel axles 52. The each bar 1 is placed on the inside of the each rear wheel 51.

## Claims

1. A cycle, especially a two-wheeled cycle, with a lever drive consisting of two vertical bars parallel to each other and ending in the upper part with a backrest (2) with a harness, connected in the middle part to a seatpost, and in a lower part attached to pedal axles working with a left rubber and right rubber is equipped with at least one rear wheel and two horizontal brackets attached to a frame and ending with foot supports in a front part of the cycle, is **characterised in that**:
frame brackets (4) are attached in the rear part to a bar axle (7) so that an axle bracket (11) is rigidly attached to one side of the seatpost (10) and attached on the other side to the bar axle (7), bars (1) are movably attached to the ends of the bar axle (7), and on the other side the seatpost (10) is rigidly attached to a tube B (15) rigidly connected to the frame brackets (4),
the cycle features a support mechanism in which top tubes (20) are movably attached to the ends of two support tubes (18) and movably connected to a tube A (22) rigidly attached to the frame brackets (4), an upper support tube (24) is rigidly attached to the front ends of the support tubes (18), with the upper backrest (2) movably attached to the upper support tube (24), while an upper bar tube (28) is rigidly attached to an upper part of the bars (1); support tubes (18) are movably attached in the middle part to the upper bar tube (28), a transverse rear tube (31) of a lower backrest (3) is rigidly attached to an upper parts of the top tubes (20); connecting tubes (32) of the lower backrest (3) are movably attached to the transverse rear tube (31) of the lower backrest (3) and connected on the other side to a lower backrest tube (35), to which the lower backrest (3) is rigidly attached, and a backrests connector (37) is movably attached to the middle part of the upper support tube (24) and the middle part of the lower backrest tube (35),
whereby to the lower ends of the bars (1) there are rigidly attached linkages (41), connected to pedal axles (43), to which the left rubber (44) and the right rubber (45) are movably attached to the pedal axles (43), and the cycle is equipped with an adjustable saddle (48) mounted on the frame brackets (4).

2. The cycle according to claim 1 wherein the left rubber (44) on the left side of the frame (5) is movably attached with one end to the pedal axle (43), and the other end of the left rubber (44) is rigidly connected to the left rubber bracket (46), while the right rubber (45) on the right side of the frame (5) is movably attached with the one end to the pedal axle (43) and the other end of the right rubber (45) is rigidly connected to the right rubber bracket (47) mounted on the frame bracket (4) on the right side of the frame (5).

3. The cycle according to claim 1 or 2 wherein four concave discs (49) are attached to the lower part of the saddle (48), two for the each frame bracket (4) and two clamps (50) - one for the each frame bracket (4).

4. The cycle according to claim 1, 2 or 3 wherein it is equipped with two rear wheels (51) attached to the ends of a rear wheel axle (52) protruding beyond the outline of the bars (1) and attached to the frame (5) in place of one rear wheel (51) with a drive cassette (53) mounted on the rear wheel axle (52).

## Patentansprüche

1. Ein Fahrrad, insbesondere zweirädriges Fahrrad, mit einem Hebelantrieb, der aus zwei zueinander parallelen vertikalen Stangen besteht und im oberen Teil mit einer Rückenlehne mit einem Gurt endet, die im mittleren Teil mit einer Sattelstütze verbunden ist, und in einem unteren Teil an Pedalachsen befestigt ist, die mit einem linken Gummi und einem rechten Gummi arbeiten, mit mindestens einem Hinterrad und zwei horizontalen Halterungen ausgestattet ist, die an einem Rahmen befestigt sind und mit Fußstützen in einem vorderen Teil des Fahrrads enden, **dadurch gekennzeichnet, dass**:
Rahmenhalterungen (4) im hinteren Teil an einem Achsträger (7) befestigt sind, so dass eine Achshalterung (11) starr an einer Seite der Sattelstütze (10) und auf der anderen Seite an dem Achsträger (7) befestigt ist, Stangen (1) beweglich an den Enden der Lenkerachse (7) befestigt sind, und auf der anderen Seite die Sattelstütze (10) starr an einem Rohr B (15) befestigt ist, das starr mit den Rahmenhalterungen (4) verbunden ist,
das Fahrrad einen Stützmechanismus aufweist, bei dem obere Rohre (20) beweglich an den Enden von zwei Stützrohren (18) angebracht und beweglich mit dem Rohr A (22) verbunden sind, das starr mit den Rahmenhalterungen (4) verbunden ist, ein oberes Stützrohr (24) starr an den vorderen Enden der Stützrohre (18) angebracht ist, wobei die obere Rückenlehne (2) beweglich an dem oberen Stützrohr (24) angebracht ist, während ein oberes Lenkerrohr (28) starr an einem oberen Teil der Stangen (1) angebracht ist; die Stützrohre (18) sind im mittleren Teil beweglich am oberen Lenkerrohr (28) befestigt, das hintere Querrohr (31) der unteren Rückenlehne (3) ist starr an einem oberen Teil der oberen Rohre (20) befestigt; die Verbindungsrohre (32) der unteren Rückenlehne (3) sind beweglich an dem hinteren Querrohr (31) der unteren Rückenlehne (3) angebracht und auf der anderen Seite mit einem unteren Rückenlehnenrohr (35) verbunden, an dem die untere Rückenlehne (3) starr befestigt ist, und ein Rückenlehnenverbinder (37) ist beweglich an dem mittleren Teil des oberen Stützrohrs (24) und dem mittleren Teil des unteren Rückenlehnenrohrs (35) angebracht, wobei an den unteren Enden der Stangen (1) Gestänge (41) starr angebracht sind, die mit Pedalachsen (43) verbunden sind, an denen das linke Gummi (44) und das rechte Gummi (45) beweglich befestigt sind, und das Fahrrad mit einem verstellbaren Sattel (48) ausgestattet ist, der an den Rahmenhalterungen (4) angebracht ist.

2. Das Fahrrad nach Anspruch 1, wobei der linke Gummi (44) auf der linken Seite des Rahmens (5) mit einem Ende beweglich an der Pedalachse (43) befestigt ist und das andere Ende des linken Gummis (44) starr mit der linken Gummihalterung (46) verbunden ist, während das rechte Gummi (45) auf der rechten Seite des Rahmens (5) mit dem einen Ende beweglich an der Pedalachse (43) befestigt ist und das andere Ende des rechten Gummis (45) starr mit der rechten Gummihalterung (47) verbunden ist, die an der Rahmenhalterung (4) auf der rechten Seite des Rahmens (5) angebracht ist.

3. Das Fahrrad nach Anspruch 1 oder 2, bei dem vier konkave Scheiben (49) am unteren Teil des Sattels (48) befestigt sind, zwei für jede Rahmenhalterung (4) und zwei Klammern (50) - eine für jede Rahmenhalterung (4).

4. Das Fahrrad nach Anspruch 1, 2 oder 3, **dadurch gekennzeichnet, dass** es mit zwei Hinterrädern (51) ausgestattet ist, die an den Enden einer Hinterradachse (52) befestigt sind, die über den Umriss der Stangen (1) hinausragt und am Rahmen (5) anstelle eines Hinterrades (51) mit einer auf der Hinterradachse (52) montierten Antriebskassette (53) befestigt ist.

## Revendications

1. Un vélo, en particulier un vélo à deux roues, avec un entraînement par levier consistant en deux barres verticales parallèles l'une à l'autre et se terminant dans la partie supérieure par un dossier avec un harnais, reliées dans la partie centrale à une tige de selle, et dans la partie inférieure attachées à des axes de pédales fonctionnant avec un caoutchouc gauche et un caoutchouc droit est équipé d'au moins une roue arrière et de deux supports horizontaux fixés à un cadre et se terminant par des supports de pieds dans une partie avant du vélo, est **caractérisé en ce que** :
Les supports de cadre (4) sont fixés dans la partie arrière à un axe de barre (7) de sorte qu'un support d'axe (11) est fixé rigidement d'un côté de la tige de selle (10) et fixé de l'autre côté à l'axe de barre (7), les barres (1) sont fixées de manière mobile aux extrémités de l'axe de barre (7) et, de l'autre côté, la tige de selle (10) est fixée rigidement à un tube B (15) relié rigidement aux supports de cadre (4),
le vélo comporte un mécanisme de support dans lequel les tubes supérieurs (20) sont fixés de manière mobile aux extrémités de deux tubes de support (18) et reliés de manière mobile au tube A (22) fixé rigidement aux supports de cadre (4), un tube de support supérieur (24) est fixé rigidement aux extrémités avant des tubes de support (18), le dossier supérieur (2) étant fixé de manière mobile au tube de support supérieur (24), tandis qu'un tube de barre supérieur (28) est fixé rigidement à une partie supérieure de barres (1) ; Les tubes de support (18) sont fixés de manière mobile dans la partie centrale au tube de barre supérieur (28), le tube arrière transversal (31) du dossier inférieur (3) est fixé rigidement à une des parties supérieures des tubes supérieurs (20) ;
les tubes de liaison (32) du dossier inférieur (3) sont fixés de manière mobile au tube arrière transversal (31) du dossier inférieur (3) et reliés de l'autre côté à un tube de dossier inférieur (35), auquel le dossier inférieur (3) est fixé rigidement, et un connecteur de dossier (37) est fixé de manière mobile à la partie centrale du tube de support supérieur (24) et à la partie centrale du tube de dossier inférieur (35),
aux extrémités inférieures des barres (1) sont fixés rigidement des liaisons (41), reliées aux axes de pédales (43), auxquelles le caoutchouc gauche (44) et le caoutchouc droit (45) sont fixés de manière mobile aux axes de pédales (43), et le vélo est équipé d'une selle réglable (48) montée sur les supports de cadre (4).

2. Le vélo selon la revendication 1, dans lequel le caoutchouc gauche (44) du côté gauche du cadre (5) est fixé de manière mobile à l'axe de pédale (43), et l'autre extrémité du caoutchouc gauche (44) est reliée de manière rigide au support de caoutchouc gauche (46), tandis que le caoutchouc droit (45) du côté droit du cadre (5) est fixé de manière mobile par une extrémité à l'axe de pédale (43) et l'autre extrémité du caoutchouc droit (45) est reliée rigidement au support de caoutchouc droit (47) monté sur le support de cadre (4) du côté droit du cadre (5).

3. Le vélo selon la revendication 1 ou 2, dans lequel quatre disques concaves (49) sont fixés à la partie inférieure de la selle (48), deux pour chaque support de cadre (4), et deux pinces (50) - une pour chaque support de cadre (4).

4. Le vélo selon la revendication 1, 2 ou 3, dans lequel il est équipé de deux roues arrière (51) fixées aux extrémités d'un axe de roue arrière (52) dépassant le contour des barres (1) et fixé au cadre (5) à la place d'une roue arrière (51) avec une cassette d'entraînement (53) montée sur l'axe de roue arrière (52).
